# EUROPEAN PATENT APPLICATION

(11) **EP 0 916 863 A1**
(43) Date of publication of application: **19.05.1999**
(21) Application number: 98121841.5
(22) Date of filing: 17.11.1998
(51) Int. Cl.: F16D 9/06, F16D 7/04

(54) **Power transmission mechanism suitable for use in a compressor**

(30) Priority: 17.11.1997 JP 332437/97
(71) Applicant: Sanden Corporation, Isesaki-shi, Gunma 372-8502 (JP)
(72) Inventor: Hatakeyama, Hideharu c/o SANDEN CORPORATION, Isesaki-shi, Gunma 372 (JP)
(74) Representative: Prüfer, Lutz H., Dipl.-Phys.

(57) **Abstract**

In a power transmission mechanism for transmitting a rotation force from a retaining member (3) to a hub (4) through an elastic member (5) interposed between the first and the second rotation members, the elastic member has a rotation-preventing portion (34c) connected between a first and a second elastic portion (34a, 34b) which are coupled to the first and the second rotation members, respectively. The rotation-preventing portion prevents the first and the second elastic portions from being relatively rotated in a rotation direction. When an overload is loaded between the first and the second rotation members in the rotation direction, the rotation-preventing portion permits a relative rotation between the first and the second elastic portions. It is preferable that a plurality of through holes (50) are formed to the rotation-preventing portion for embrittling the rotation-preventing portion in the rotation direction in comparison with the first and the second elastic portions.

## Description

### Background of the Invention:

The present invention relates to a power transmission mechanism suitable for use in a compressor included in a vehicle air conditioner.

Such a power transmission mechanism is disclosed in, for example, JP-A-8-135752. Referring to Fig. 1, the power transmission mechanism will be described below. A rotor 11 is supported rotatably on a shaft 12 and formed with a pulley 13 which can be rotated by a vehicular engine through at least one belt in the manner known in the art. The rotor 11 is provided with elastic ring members 14 made of rubber. The elastic ring members 14 are attached to the rotor 11 by means of pins 15, respectively. On the other hand, the shaft 12 is provided with retaining arrangements each of which comprises two finger members 16a and 16b opposite to each other.

In the normal operation, the elastic ring members 14 are held between the opposite finger members 16 and function to absorb torque fluctuation the shaft 12. In the overload condition upon locking of the shaft 12, each of the elastic ring members 14 deforms to get through the finger members 16 so as to prohibit a power transmission between the rotor 11 and the shaft 12.

A power transmission mechanism of the type described is also disclosed in JP-A-9-4564 in which an annular cushion rubber member functions to absorb torque fluctuation in the normal operation. In the overload condition upon locking, a relationship for power transmission between the cushion rubber member and at least one of a pulley and a driving force transmission member is marred to prohibit the power transmission.

The structure of the former publication has the following problems:
(1) While the power transmission is prohibited, the elastic ring members collide with the retaining members upon passing therethrough, so that noise is generated.
(2) The rotation direction is limited to one direction.
(3) The amount of the rubber is small so that a vibration absorbing capability is small.
(4) The structure is complicated and costly.

Similarly, the structure of the latter publication has the following problems:
(1) While the power transmission is prohibited, a convex portion of the cushion rubber member collides with a retaining member on the side of the pulley or the driving force transmission member as it slides over the retaining member, so that noise tends to be generated.
(2) The structure is complicated and costly.

### Summary of the Invention:

It is therefore an object of the present invention to provide a power transmission mechanism for a compressor, which has a simple structure and is less noisy, free of a rotation direction and capable of absorbing vibration to a sufficient level.

Other objects of the present invention will become clear as the description proceeds.

A power transmission mechanism to which the present invention is applicable is for transmitting a rotation force from a first rotation member to a second rotation member through an elastic member interposed between the first and the second rotation members. The power transmission mechanism is characterized in that the elastic member comprises a first elastic portion coupled to the first rotation member, a second elastic portion coupled to the second rotation member, and a rotation-preventing portion connected to the first and the second elastic portions for preventing the first and the second elastic portions from being relatively rotated in a rotation direction. In the power transmission mechanism, the rotation-preventing portion permits a relative rotation between the first and the second elastic portions when an overload is loaded between the first and the second rotation members in the rotation direction.

### Brief Description of the Drawing:

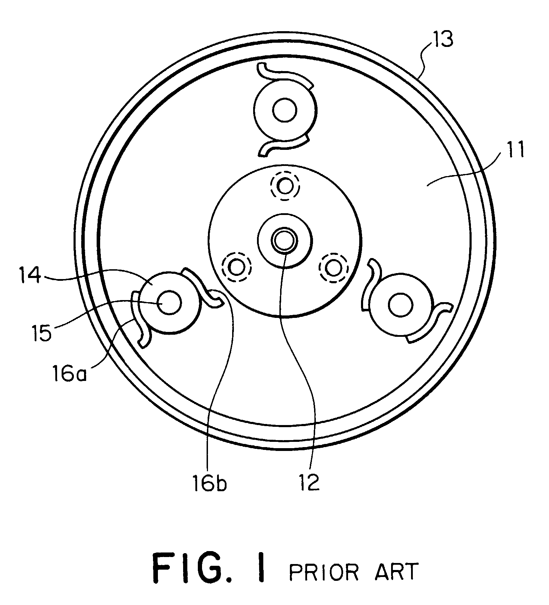

Fig. 1 is a diagram showing a conventional power transmission mechanism for a compressor;
Fig. 2 is a sectional view of a power transmission mechanism according to a first preferred embodiment of the present invention;
Fig. 3 is an elevation view of the power transmission mechanism shown in Fig. 2;
Fig. 4 is a sectional view of a power transmission mechanism according to a second preferred embodiment of the present invention;
Fig. 5 is an elevation view of the power transmission mechanism shown in Fig. 4;
Fig. 6 is a sectional view of a power transmission mechanism according to a third preferred embodiment of the present invention;
Fig. 7 is an elevation view of the power transmission mechanism shown in Fig. 6;
Fig. 8 is a sectional view of a power transmission mechanism according to a fourth preferred embodiment of the present invention; and
Fig. 9 is an elevation view of the power transmission mechanism shown in Fig. 8.

### Description of the Preferred Embodiments:

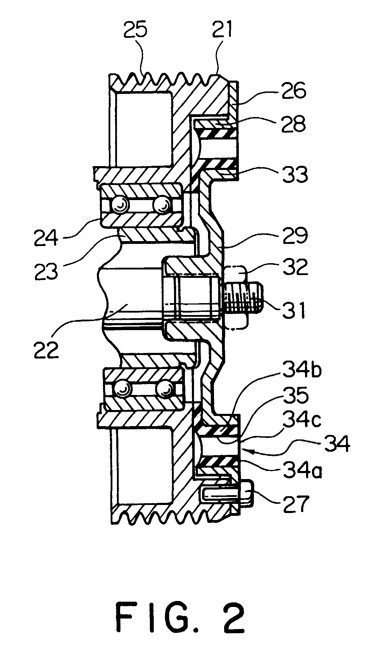

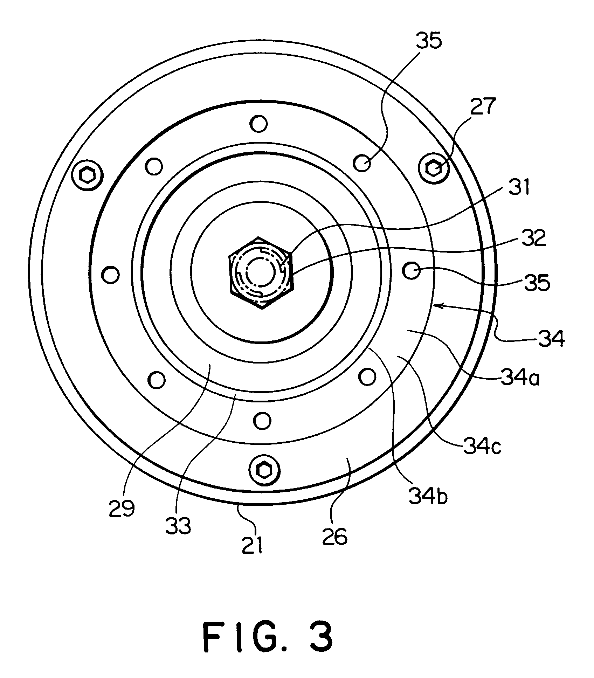

Referring to Figs. 2 and 3, description will be made as regards a power transmission mechanism according to a first preferred embodiment of the present invention. The power transmission mechanism is used in a compressor included in a vehicle air conditioner and is for transmitting a power from a vehicular engine to the compressor.

The power transmission mechanism comprises a rotor 21 and a shaft 22 which are concentric with each other. The rotor 21 is placed outside of a fixed cylinder member 23 and rotatably supported to the fixed cylinder member 23 through an outer radial bearing 24. The rotor 21 has a pulley 25 at an outer peripheral surface thereof and is rotated by the vehicular engine through belts in the manner known in the art.

The shaft 22 is placed inside of the fixed cylinder member 23 and rotatably supported to the fixed cylinder member 23 through an inner radial bearing (not shown). The shaft 22 is connected to a compressing element included in the compressor and serves as a compressor rotation shaft.

The fixed cylinder member 23 is fixed to or formed integral with a casing or a front end plate of the compressor.

A retainer 26 is fixed to the rotor 21 by a plurality of fixing bolts 27. The fixed cylinder member 23 has a first cylindrical portion 28 extending in an axial direction of the rotor 21 and the shaft 22. A combination of the rotor 21 and the retainer 26 is referred to as a first rotation member.

A hub 29 is connected to the shaft 22 by a bolt 31 and a nut 32 screwed over the bolt 31. The hub 29 has a second cylindrical portion 33 opposite to the first cylindrical portion 28 in a radial direction of the rotor 21 and the shaft 22. A combination of the shaft 22 and the hub 27 is referred to as a second rotation member.

The power transmission mechanism further comprises an elastic member 34 which is of an annular shape and interposed between the first and the second cylindrical portions 28 and 33 so as to couple them with each other. The elastic member 34 is made of rubber and comprises a first elastic portion 34a, a second elastic portion 34b, and a third elastic portion as a rotation-preventing portion 34c which are integral with one another. The first elastic portion 34a is circularly extended along the first cylindrical portion 28 and adhered thereto. The second elastic portion 34b is circularly extended along the second cylindrical portion 33 and adhered thereto. The third elastic portion 34c extends between the first and the second elastic portions 34a and 34b in a rotation direction of rotor 21 and the shaft 22.

As best shown in Fig. 3, the third elastic portion 34c is formed with a plurality of through holes 35 which are arranged at regular intervals in the rotation direction.

Each of the holes 35 is circular in a cross-section thereof and penetrates the elastic member in the axial direction. The holes 35 make the elastic member 34 have a so-called weak or fragile portion which is designed to be broken when an applied load exceeds a predetermined value in the overload condition, such as locking, of the compressor. In other words, the third elastic portion 34c permits a relative rotation between the rotor 22 and the shaft 22 when an overload is loaded between the rotor 22 and the shaft 23 in the rotation direction. In this event, the holes 35 serves as an embrittling arrangement for embrittling the third elastic portion 34c in the rotation direction in comparison with the first and the second elastic portions 34a and 34b.

Specifically, in the overload condition of the compressor, the fragile portions are broken to allow sliding of broken elastic members relative to each other so as to prohibit the power transmission from the vehicle engine. While prohibiting the power transmission, since there are no colliding portions as opposed to the prior art, no noise is essentially generated. Further, since the amount of the elastic material is large, a vibration absorbing capability is large. Moreover, there is no limitation to the rotation direction.

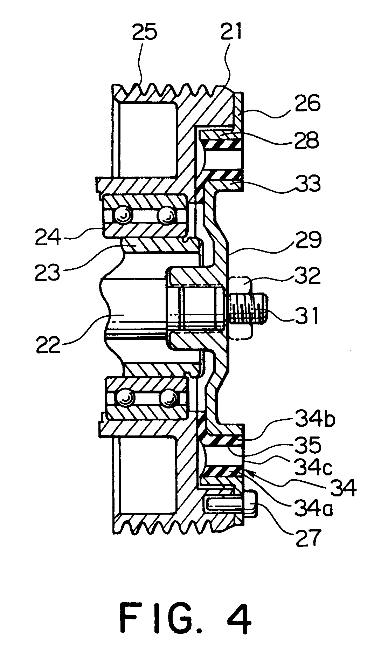

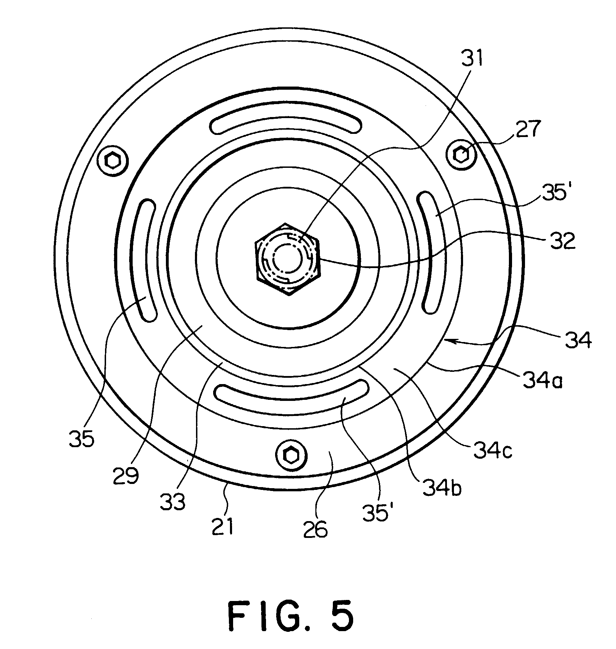

Referring to Figs. 4 and 5, the description will be made as regards a power transmission mechanism according to a second preferred embodiment of the present invention. The power transmission mechanism comprises similar parts designated by like reference numerals.

In the power transmission mechanism, each of the through holes is designated by a reference numeral 35' and elongated in the rotation direction. In other words, instead of the circular holes in the first preferred embodiment, elongate holes are arranged at regular intervals in a circumferential direction.

Also in the power transmission mechanism, the through holes 35' form the fragile portions which are broken to slide in the overload condition of the compressor so as to prevent the spread of damage. Further, there is no limitation to the rotation direction as in the first preferred embodiment.

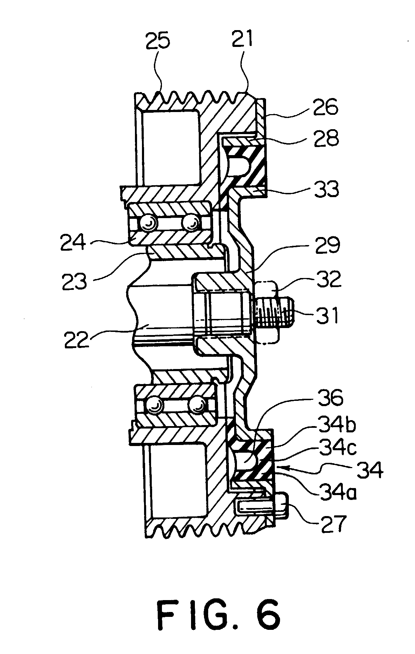

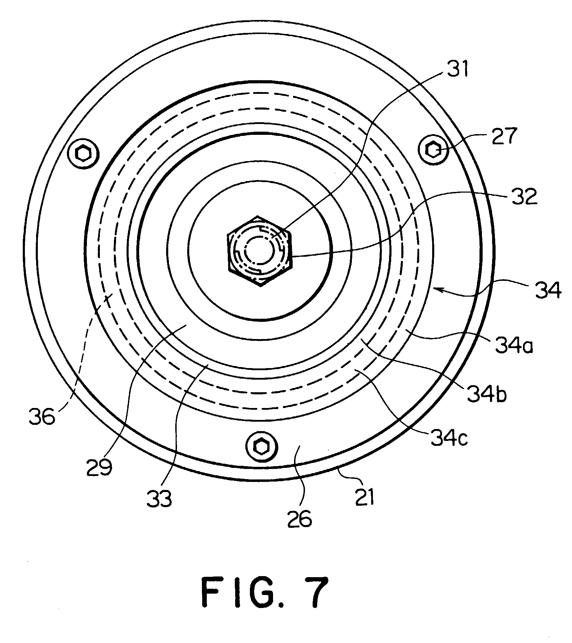

Referring to Figs. 6 and 7, the description will be made as regards a power transmission mechanism according to a third preferred embodiment of the present invention. The power transmission mechanism comprises similar parts designated by like reference numerals.

In the power transmission mechanism, the elastic member 34 is formed with an annular groove 36 instead of the through holes 35 in Figs. 2 though 5. The annular groove has a U-shape in section and is elongated in the rotation direction to form a circular shape.

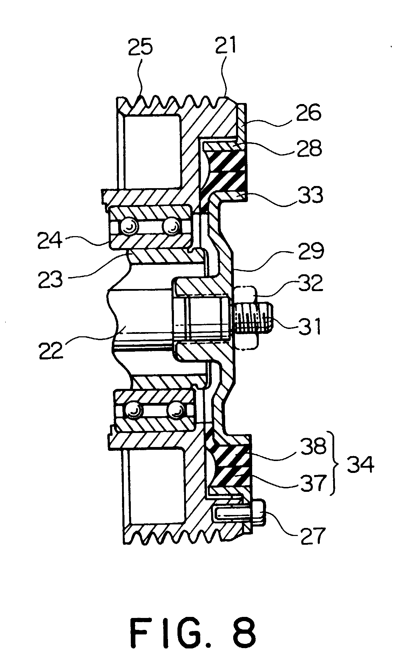

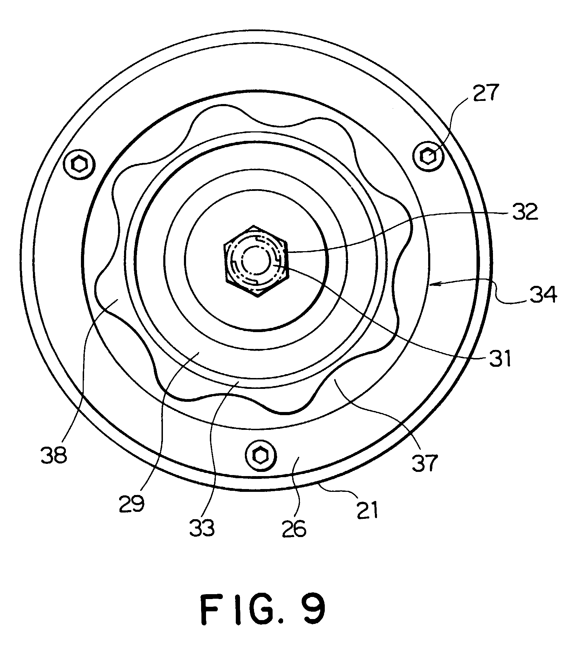

Referring to Figs. 8 and 9, the description will be made as regards a power transmission mechanism according to a fourth preferred embodiment of the present invention. The power transmission mechanism comprises similar parts designated by like reference numerals.

In the power transmission mechanism, the elastic member 34 is divided into an outer and an inner annular elastic member 37 and 38 which have concavoconvex engaging portions, respectively, and are snugly fitted to each other to engage with each other through a concavoconvex engagement therebetween. In other words, the third elastic portion comprises a first engaging portion integral with the first elastic portion and a second engaging portion which is integral with the second elastic portion and engaged with the first engaging portion in the rotation direction.

When an applied load exceeds a predetermined value in the overload condition of the compressor, the concavoconvex engagement between the elastic members 53, 54 is released to allow them to slide relative to each other, so that the power transmission is prohibited. In other words, the second engaging portion become disengaged from the first engaging portion in response to lading of the overload.

As best shown in Fig. 9, the concavoconvex engagement is in the form of a wavelike concavoconvex engagement. However, the concavoconvex engagement may take another form, such as an angular concavoconvex engagement or a sawlike concavoconvex engagement.

Each of the above-mentioned power transmission mechanisms has a simple structure and is less noisy, free of the rotation direction and capable of absorbing the vibration to a sufficient level. When the applied load exceeds the predetermined value in the overload condition of the compressor, the elastic member is broken to allow sliding of the broken elastic members relative to each other or the elastic members slide relative to each other, so that essentially no noise is generated. Since the structure is simple and requires only a small number of parts, the cost can be reduced in assembling and manufacturing. Since the structure is free of the rotation direction, the repairing, maintenance and checking are easy. Since the elastic members of rubber slide relative to each other, the heating value is small with no possibility of fire, resulting in less heat influence to other components.

While the present invention has thus far been described in connection with a few embodiments thereof, it will readily be possible for those skilled in the art to put this invention into practice in various other manners. For example, the groove is not necessarily continuous, but may be divided into a plurality of pieces in the rotation direction. Although the elastic member is made of rubber, it may be made of one of other suitable elastic materials.

## Claims

1. A power transmission mechanism for transmitting a rotation force from a first rotation member (3) to a second rotation member (4) through an elastic member (5, 53, 54) interposed between said first and said second rotation members, characterized in that said elastic member comprises:
a first elastic portion (34a) coupled to said first rotation member;
a second elastic portion (34b) coupled to said second rotation member; and
a rotation-preventing portion (34c) connected to said first and said second elastic portions for preventing said first and said second elastic portions from being relatively rotated in a rotation direction, said rotation-preventing portion permitting a relative rotation between said first and said second elastic portions when an overload is loaded between said first and said second rotation members in said rotation direction.

2. A power transmission mechanism as claimed in claim 1, wherein said rotation-preventing portion is formed integral with said first and said second elastic portions and has embrittling means for embrittling said rotation-preventing portion in said rotation direction in comparison with said first and said second elastic portions.

3. A power transmission mechanism as claimed in claim 2, wherein said embrittling means has a plurality of through holes each of which penetrates said rotation-preventing portion in an axial direction.

4. A power transmission mechanism as claimed in claim 3, wherein each of said through holes is circular in a cross-section thereof.

5. A power transmission mechanism as claimed in claim 3, wherein each of said through holes is elongated in said rotation direction.

6. A power transmission mechanism as claimed in one of claims 2 to 5, wherein said embrittling means has a groove elongated in said rotation direction.

7. A power transmission mechanism as claimed in claim 6, wherein said groove forms a circlar shape.

8. A power transmission mechanism as claimed in one of claims 1 to 7, wherein said rotation-preventing portion comprises:
a first engaging portion integral with said first elastic portion; and
a second engaging portion integral with said second elastic portion and engaged with said first engaging portion in said rotation direction, said second engaging portion being disengaged from said first engaging portion in response to loading of said overload.

9. A power transmission mechanism as claimed in one of claims 1 to 8, wherein first and said second engaging portions have concavoconvex portions snugly fitted to each other, said concavoconvex portions sliding relative to each other in said rotation direction in response to loading of said overload.

10. A power transmission mechanism as claimed in one of claims 1 to 9, wherein said first and said second rotation members are opposite to each other in a radial direction, said elastic member radially extending between said first and said second rotation members.
